# EUROPEAN PATENT APPLICATION

(11) **EP 4 681 981 A1**
(43) Date of publication of application: **21.01.2026**
(21) Application number: 25153257.8
(22) Date of filing: 22.01.2025
(51) Int. Cl.: B60L 53/80, H01M 50/202, H01M 50/262

(54) **BATTERY SWAPPING STATION AND LOCKING MODULE THEREOF**

(30) Priority: 17.07.2024 US 202463672395 P
(71) Applicant: Delta Electronics, Inc., Taoyuan City 33341 (TW)
(72) Inventor: LIU, Yu-Se, Taoyuan City (TW)
(74) Representative: 2K Patentanwälte Blasberg Kewitz & Reichel

(57) **Abstract**

A locking module is provided. The locking module is disposed on the battery container of the battery swapping station, wherein the battery container is adapted to receive a battery with an engaging structure. The locking module includes a base, a claw element, a lever, an elastic element, and an actuating unit. The claw element is rotatably disposed on the base, wherein the claw element comprises a first finger and a second finger, and the engaging structure is adapted to be received between the first finger and the second finger. The lever is rotatably disposed on the base. The elastic element is connected to the claw element. One end of the elastic element is connected to the base, and the other end of the elastic element is connected to the claw element. The actuating unit is connected to the first end of the lever.

## Description

### CROSS REFERENCE TO RELATED APPLICATIONS

This application claims the benefit of U.S. Provisional Application No. 63/672,395, filed July 17, 2024.

### BACKGROUND OF THE INVENTION

### Field of the Invention

The present invention relates to a locking module, and, in particular, it relates to a locking module in a battery swapping station.

### Description of the Related Art

Battery swapping stations are typically equipped with battery locking and unlocking mechanisms to ensure the stability and safety of batteries during the swapping process. Such mechanisms are primarily implemented through mechanical structures, such as hooks, spring structures, or rotary locking modules, which secure the battery in a designated position and release it as needed through an unlocking operation.

However, conventional battery locking and unlocking mechanisms have certain inherent drawbacks. When users pull too hard on the battery during operation, the mechanism may become jammed. This jamming is often caused by the improper application of force, where users attempt to pull the battery out before the unlocking process has been fully completed, causing the locking structure to remain partially engaged, and leading to interference or deformation of the internal moving components. Additionally, the complexity of some conventional mechanical designs, which aim to improve operational precision, can result in instability due to assembly errors or part tolerances, further contributing to jamming.

These issues not only reduce the operational efficiency of battery swapping stations but may also lead to poor user experience and potential damage to the batteries or the equipment itself. Therefore, improving battery locking and unlocking mechanisms to resolve jamming issues and enhance operational stability and reliability remains a critical challenge in this technical field.

### BRIEF SUMMARY OF THE INVENTION

An embodiment of the present invention provides a locking module. The locking module is disposed on a battery container of a battery swapping station, wherein the battery container is adapted to receive a battery with an engaging structure. The locking module comprises a base, a claw element, a lever, an elastic element, and an actuating unit. The claw element is rotatably disposed on the base, wherein the claw element comprises a first finger and a second finger, and the engaging structure is adapted to be received between the first finger and the second finger. The lever is rotatably disposed on the base. The elastic element is connected to the claw element, adapted to apply an elastic force for retracting the claw element in a first direction. One end of the elastic element is connected to the base, and the other end of the elastic element is connected to the claw element. The actuating unit is connected to the first end of the lever, wherein the actuating unit is adapted to move the lever to release the locking module into the unlocked state. When the locking module is in the locked state, the claw element is engaged with the lever, and the engaging structure is engaged against the claw element.

In one embodiment, the claw element comprises a hook, and in the locked state of the locking module, the hook is engaged with the lever and the engaging structure is received between the first finger and the second finger.

In one embodiment, the lever comprises a lever opening, and in the locked state of the locking module, the hook is received in the lever opening.

In one embodiment, the lever comprises a guiding portion, the guiding portion is formed on a second end of the lever, and before the hook is received in the lever opening, the hook is guided by the guiding portion.

In one embodiment, the lever comprises a pivoting portion, the lever pivots on the base via the pivoting portion, and the lever opening is formed between the pivoting portion and the guiding portion.

In one embodiment, the second finger is formed between the first finger and the hook, the claw element further comprises a connection portion, the connection portion is adjacent to the first finger, and the elastic element is connected to the connection portion.

In one embodiment, when the actuating unit moves the lever to switch the locking module from the locked state to the unlocked state, the lever is rotated to release the first finger, and the claw element is rotated by the elastic force.

In one embodiment, the elastic element is a tension spring.

In addition, an embodiment of the present invention provides a battery swapping station. The battery swapping station comprises a station housing, a battery container and the locking module mentioned above. The battery container is disposed in the station housing, adapted to receive a battery, wherein the battery comprises an engaging structure.

Utilizing the locking module of the embodiment of the invention, the actuating unit moves the lever to switch the locking module into the unlocked state. This process is not only efficient but also ensures that the transition to the unlocked state is smooth and prompt. The unlocking process can be fully completed speedily, reducing the risk of delays that might arise from mechanical complications. Furthermore, the streamlined operation of the actuating unit minimizes the likelihood of mechanism jamming, thereby enhancing the overall performance and durability of the system. Additionally, the mechanical design of the locking module of the embodiment of the invention is simple, which significantly contributes to ease of manufacture and maintenance. The simplicity of the design reduces the number of potential failure points, thereby increasing the long-term reliability of the locking module. By optimizing the design for functionality and durability, the embodiment ensures that the locking module operates with consistent effectiveness, even under varying conditions or prolonged usage.

### BRIEF DESCRIPTION OF THE DRAWINGS

The present invention can be more fully understood by reading the subsequent detailed description and examples with references made to the accompanying drawings, wherein:
Fig. 1 is a perspective view of a battery of the embodiment of the invention;
Fig. 2 is a perspective view of a locking module and a battery container of the embodiment of the invention;
Fig. 3 shows the details of the locking module of the embodiment of the invention;
Fig. 4 is an exploded view of the locking module of the embodiment of the invention;
Fig. 5A shows the locking module in the locked state;
Fig. 5B shows the details of the locking module in the locked state;
Figs. 5C, 5D and 5E show the locking process of the locking module of the embodiment of the invention;
Fig. 6A shows the locking module in the unlocked state;
Fig. 6B shows the details of the locking module in the unlocked state;
Fig. 7 is a schematic diagram of battery swapping station of the embodiment of the invention.

### DETAILED DESCRIPTION OF THE INVENTION

The following description is made for the purpose of illustrating the general principles of the invention and should not be taken in a limiting sense. The scope of the invention is best determined by reference to the appended claims.

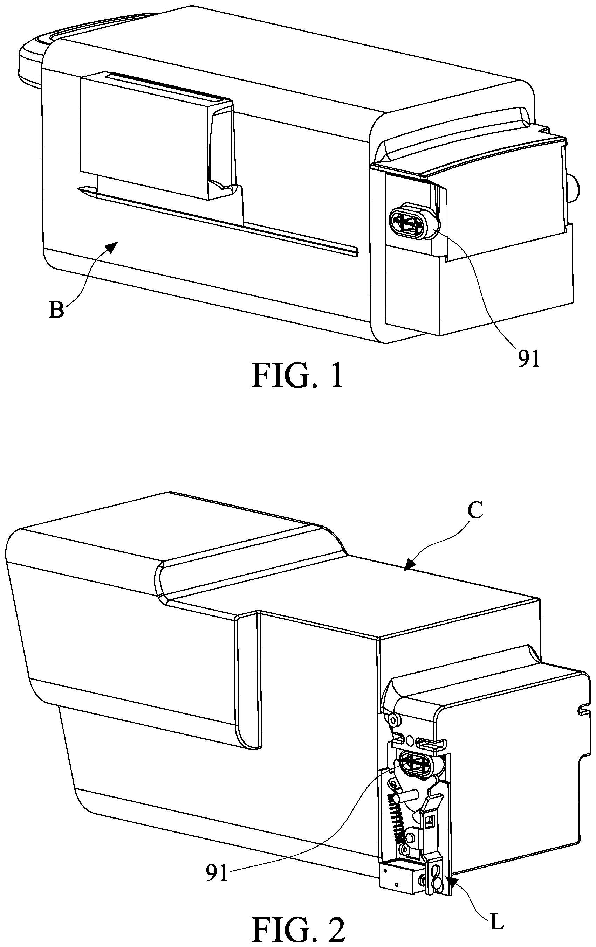

Fig. 1 is a perspective view of a battery of the embodiment of the invention. Fig. 2 is a perspective view of a locking module and a battery container of the embodiment of the invention. With reference to Figs. 1, and 2, the locking module L is disposed on a battery container C of a battery swapping station (not shown). The battery container C is adapted to receive a battery B with an engaging structure 91. In the embodiment in FIG. 1, the engaging structure 91 is an oval bump protruding from a lateral side of the battery B and positioned near an end away from a handle of the battery. In another embodiment, there may be two or more engaging structures of the same of different shapes and positioned on suitable locations of the battery, e.g., on one or different lateral sides of the battery. There may also be one or more locking modules positioned at suitable locations of the battery container for interacting with the one or more engaging structure 91.

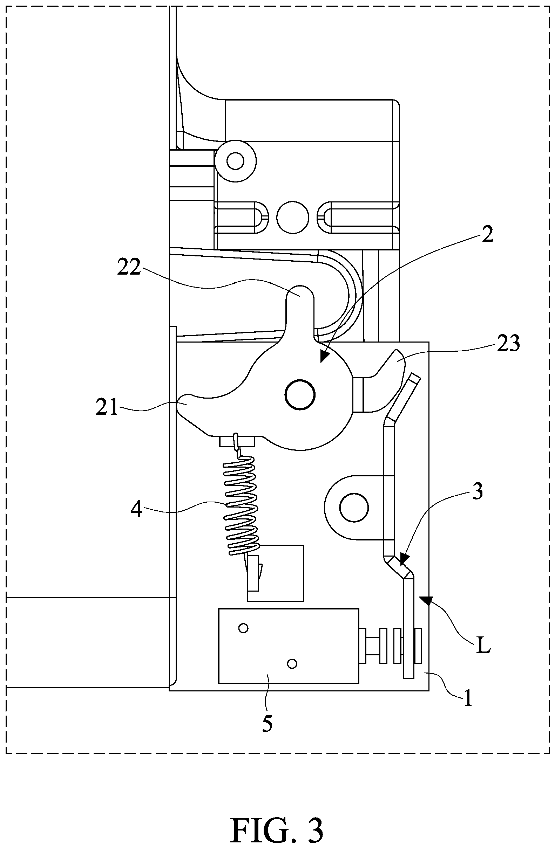

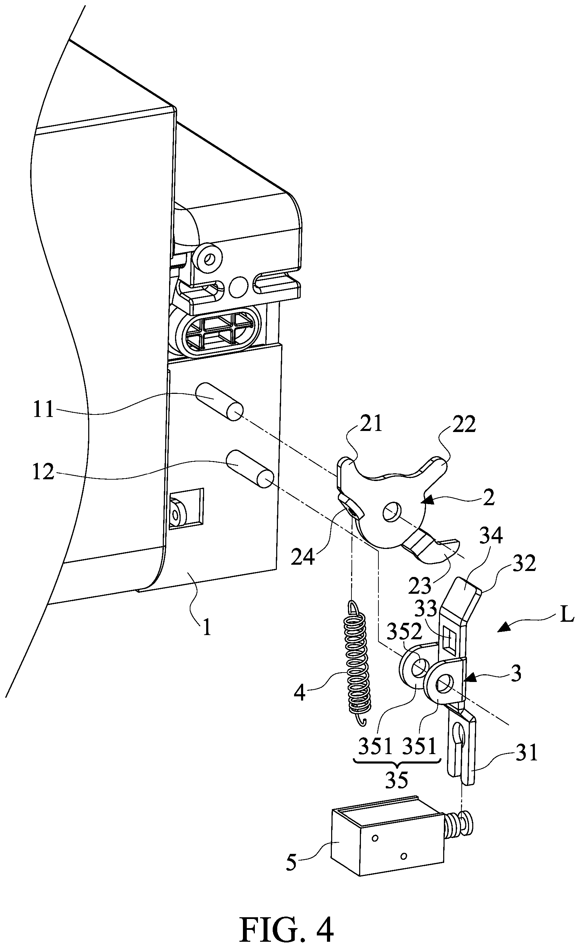

Fig. 3 shows the details of the locking module of the embodiment of the invention. Fig. 4 is an exploded view of the locking module of the embodiment of the invention. With reference to Figs. 3, and 4, the locking module L comprises a base 1, a claw element 2, a lever 3, an elastic element 4 and an actuating unit 5. The claw element 2 is rotatably disposed on the base 1. The claw element 2 comprises a first finger 21, a second finger 22, and a hook 23, and the engaging structure 91 is adapted to be received between the first finger 21 and the second finger 22. The lever 3 is rotatably disposed on the base 1. The elastic element 4 is connected to the claw element 2. The elastic element 4 is adapted to apply an elastic force for retracting the claw element 2 in a first direction. One end of the elastic element 4 is connected to the base 1, and the other end of the elastic element 4 is connected to the claw element 2.

With reference to Fig. 4, in one embodiment, the claw element 2 is rotatable around a first shaft 11.

With reference to Fig. 4, in one embodiment, the elastic element 4 is a tension spring. The tension spring is specifically designed to provide a reliable and consistent elastic force, ensuring smooth and efficient operation of the system. The disclosure is not meant to restrict the invention, as various alternative configurations are possible. For example, the elastic element 4 can alternatively be an elastic sheet, which offers flexibility and ease of integration into flat designs, or a torsion spring, which is particularly suitable for applications requiring rotational force. These variations provide additional options for adapting the invention to different functional requirements and structural constraints.

In one embodiment, the actuating unit 5 can be an electromagnetic actuator or a mechanical actuator. The electromagnetic actuator is advantageous due to its rapid response time and precise control, making it ideal for applications demanding high accuracy. Alternatively, the mechanical actuator can be utilized for its robustness and cost-efficiency. The disclosure is not meant to restrict the invention, allowing for flexibility in selecting the most appropriate actuating unit based on the specific needs of the implementation.

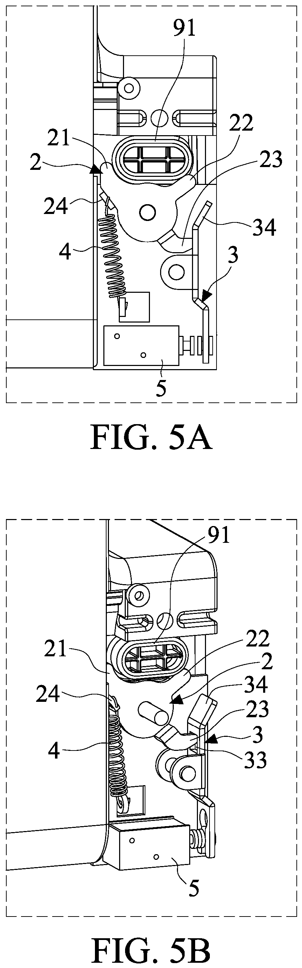

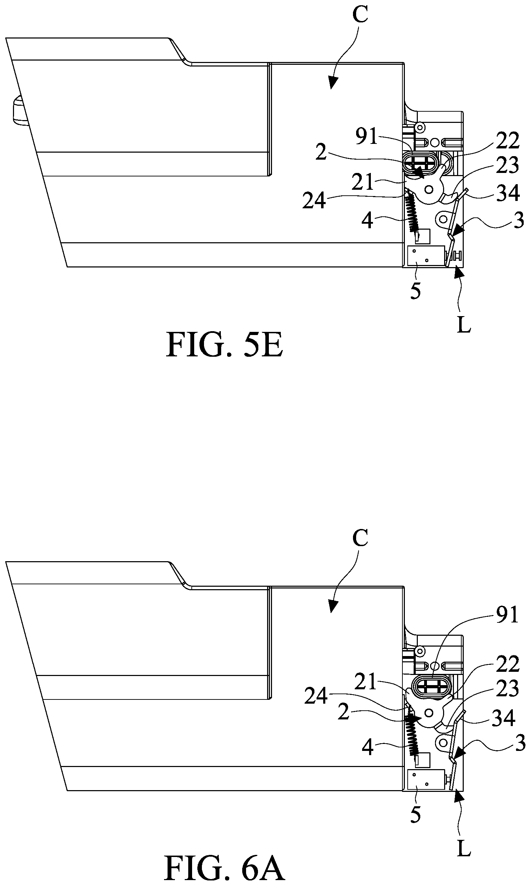

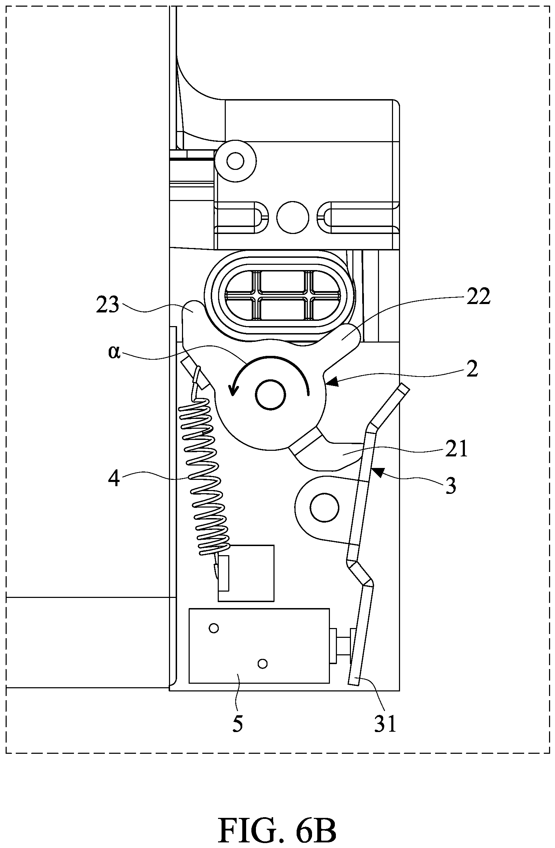

Figs. 5A and 5B show the locking module in the locked state. Fig. 6A and 6B show the locking module in the unlocked state. With reference to Figs. 5A, 5B, 6A and 6B, the actuating unit 5 is connected to the first end 31 of the lever 3, wherein the actuating unit 5 is adapted to move the lever 3 to release the locking module L into the unlocked state (Fig. 6). For example, the actuating unit 5 may be activated by an electrical signal, a magnetic signal and/or a mechanical force to move the lever 3.

When the locking module L is in the locked state (Figs. 5A and 5B), the claw element 2 is engaged with the lever 3, and the engaging structure 91 is received between the first finger 21 and the second finger 22 of the claw element 2.

With reference to Figs. 4, 5A and 5B, in one embodiment, the lever 3 comprises a lever opening 33. In the locked state of the locking module, the hook 23 is received in the lever opening 23.

With reference to Fig. 4, in one embodiment, the lever 3 comprises a guiding portion 34, the guiding portion 34 is formed on a second end 32 of the lever 3. Before the hook 23 is received in the lever opening 33, the hook 23 may move along the guiding portion 34.

With reference to Fig. 4, in one embodiment, the lever 3 comprises a pivoting portion 35. The pivoting portion 35 comprises two wind-like configurations 351, each of which comprises a hole 352 for receiving the shaft 12. In one embodiment, the two wind-like configurations 351 are parallel to each other. The lever 3 pivots on the base 1 via the pivoting portion 35. The lever opening 33 is formed between the pivoting portion 35 and the guiding portion 34. In this embodiment, the lever 3 pivots around a second shaft 12 via the pivoting portion 35.

With reference to Figs. 4, 5A and 5B, in one embodiment, the second finger 22 is formed between the first finger 21 and the hook 23. The claw element 2 further comprises a connection portion 24. The connection portion 24 is adjacent to the first finger 21, and the elastic element 4 is connected to the connection portion 24.

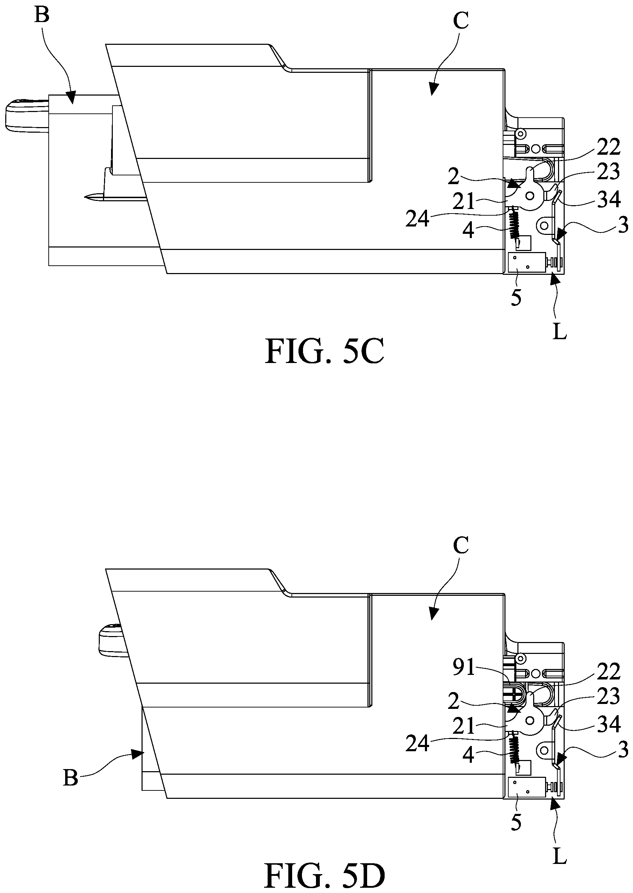

Figs. 5C, 5D and 5E show the locking process of the locking module of the embodiment of the invention. With reference to Figs. 5A, 5B, 5C, 5D and 5E, when the battery B is inserting into the battery container C (Fig. 5C), the engaging structure 91 abuts and pushes the second finger 22 (Fig. 5D). Then, the first finger 21 abuts the guiding portion 34 and pushes the lever 3 (Fig. 5D). The first finger 21 moves along the guiding portion 34 of lever 3 and sticks into the lever opening 33 (Figs. 5A and 5B), and the engaging structure 91 is engaged between the second finger 22 and the hook 23.

With reference to Figs. 6A and 6B, in one embodiment, when the actuating unit 5 moves the lever 3 to switch the locking module from the locked state to the unlocked state, the lever 3 is rotated to release the first finger 21, and the claw element 2 is rotated by the elastic force of the elastic element 4. Particularly, the elastic element 4 applies the elastic force for retracting the claw element 2 in a first direction *α*.

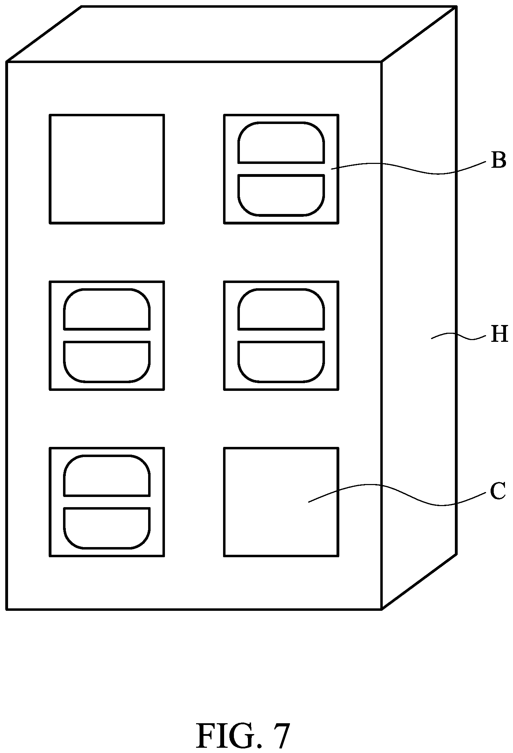

Fig. 7 is a schematic diagram of battery swapping station of the embodiment of the invention. With reference to Fig. 7, in one embodiment, the battery swapping station comprises a station housing H, a plurality of battery container C and the locking module mentioned above (not shown). The battery container C is disposed in the station housing H, adapted to receive a battery B. In one embodiment, the battery swapping station is equipped with a network communication module, enabling it to connect to a centralized management server via wired or wireless communication networks. This connectivity allows real-time monitoring of battery inventory, usage patterns, and operational status. The station further incorporates remote control capabilities, permitting authorized personnel to lock or unlock specific battery containers C or initiate maintenance procedures from a remote location. To enhance operational efficiency, the station housing H integrates sensors and IoT devices to track environmental conditions such as temperature and humidity, ensuring optimal storage conditions for the batteries B. Moreover, the system supports integration with mobile applications, providing users with functionalities such as locating available battery swapping stations, reserving battery containers, and receiving notifications about the status of their battery swaps.

Utilizing the locking module of the embodiment of the invention, the actuating unit moves the lever to switch the locking module into the unlocked state. This process is not only efficient but also ensures that the transition to the unlocked state is smooth and prompt. The unlocking process can be fully completed speedily, reducing the risk of delays that might arise from mechanical complications. Furthermore, the streamlined operation of the actuating unit minimizes the likelihood of mechanism jamming, thereby enhancing the overall performance and durability of the system. Additionally, the mechanical design of the locking module of the embodiment of the invention is simple, which significantly contributes to ease of manufacture and maintenance. The simplicity of the design reduces the number of potential failure points, thereby increasing the long-term reliability of the locking module. By optimizing the design for functionality and durability, the embodiment ensures that the locking module operates with consistent effectiveness, even under varying conditions or prolonged usage.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A locking module, disposed on a battery container of a battery swapping station, wherein the battery container is adapted to receive a battery with an engaging structure, **characterized in** comprising:
a base;
a claw element, rotatably disposed on the base, wherein the claw element comprises a first finger and a second finger, and the engaging structure is adapted to be received between the first finger and the second finger;
a lever, rotatably disposed on the base;
an elastic element, connected to the claw element, adapted to apply an elastic force for retracting the claw element in a first direction wherein one end of the elastic element is connected to the base, and the other end of the elastic element is connected to the claw element; and
an actuating unit, connected to a first end of the lever, wherein the actuating unit is adapted to move the lever to release the locking module into an unlocked state,
wherein when the locking module is in a locked state, the claw element is engaged with the lever, and the engaging structure is engaged against the claw element.

2. The locking module as claimed in claim 1, wherein the claw element comprises a hook, and in the locked state of the locking module, the hook is engaged with the lever and the engaging structure is received between the first finger and the second finger.

3. The locking module as claimed in claim 2, wherein the lever comprises a lever opening, and in the locked state of the locking module, the hook is received in the lever opening.

4. The locking module as claimed in claim 3, wherein the lever comprises a guiding portion, the guiding portion is formed on a second end of the lever, and before the hook is received in the lever opening, the hook is guided by the guiding portion.

5. The locking module as claimed in claim 4, wherein the lever comprises a pivoting portion, the lever pivots on the base via the pivoting portion, and the lever opening is formed between the pivoting portion and the guiding portion.

6. The locking module as claimed in claim 5, wherein the second finger is formed between the first finger and the hook, the claw element further comprises a connection portion, the connection portion is adjacent to the first finger, and the elastic element is connected to the connection portion.

7. The locking module as claimed in any of the claims 3 to 6, wherein when the actuating unit moves the lever to switch the locking module from the locked state to the unlocked state, the lever is rotated to release the hook, and the claw element is rotated by the elastic force.

8. The locking module as claimed in any of the claims 3 to7, wherein the elastic element is a tension spring.

9. A battery swapping station, **characterized in** comprising:
a station housing;
a battery container, disposed in the station housing, adapted to receive a battery, wherein the battery comprises an engaging structure; and
the locking module as claimed in claims 1-8, disposed on the battery container.

## Amended claims

### Amended claims in accordance with Rule 137(2) EPC.

1. A locking module (L), disposed on a battery container (C) of a battery swapping station, wherein the battery container (C) is adapted to receive a battery (B) with an engaging structure (91), **characterized in** comprising:
a base (1);
a claw element (2), rotatably disposed on the base (1), wherein the claw element (2) comprises a first finger (21), a second finger (22) and a hook (23), and the engaging structure (91) of the battery (B) is adapted to be received between the first finger (21) and the second finger (22);
a lever (3), rotatably disposed on the base (1);
an elastic element (4), connected to the claw element (2), adapted to apply an elastic force for retracting the claw element (2) in a first direction, wherein one end of the elastic element (4) is connected to the base (1), and the other end of the elastic element (4) is connected to the claw element (2); and
an actuating unit (5), connected to a first end (31) of the lever (3), wherein the actuating unit (5) is adapted to move the lever (3) to release the locking module (L) into an unlocked state,
**characterized in that**
when the battery (B) is inserted in to the battery container (C), the engaging structure (91) of the battery (B) abuts and pushes the second finger (22) of the claw element (2) so that the claw element (2) rotates along with an insertion direction of the battery (B), the hook (23) of the claw element (2) pushes and engages with the lever (3), and the engaging structure (91) of the battery (B) is received between the first finger (21) and the second finger (22) of the claw (2) in a locked state.

2. The locking module as claimed in claim 1, wherein the lever (3) comprises a lever opening (33), and in the locked state of the locking module (L), the hook (23) is received in the lever opening (33)

3. The locking module as claimed in claim 2, wherein the lever (3) comprises a guiding portion (34), the guiding portion (34) is formed on a second end (32) of the lever (3), and before the hook (23) is received in the lever opening (33), the hook (23) is guided by the guiding portion (34).

4. The locking module as claimed in claim 3, wherein the lever (3) comprises a pivoting portion (35), the lever (3) pivots on the base (1) via the pivoting portion (35), and the lever opening (33) is formed between the pivoting portion (35) and the guiding portion (34).

5. The locking module as claimed in claim 4, wherein the second finger (22) is formed between the first finger (21) and the hook (23), the claw element (2) further comprises a connection portion (24), the connection portion (24) is adjacent to the first finger (21), and the elastic element (4) is connected to the connection portion (24).

6. The locking module as claimed in any of the claims 2 to 5, wherein when the actuating unit (5) moves the lever (3) to switch the locking module (L) from the locked state to the unlocked state, the lever (3) is rotated to release the hook (23), and the claw element (2) is rotated by the elastic force.

7. The locking module as claimed in any of the claims 2 to 6, wherein the elastic element (4) is a tension spring.

8. A battery swapping station, **characterized in** comprising:
a station housing (H);
a battery container (C), disposed in the station housing (H), adapted to receive a battery (B), wherein the battery (B) comprises an engaging structure (91); and
the locking module (L) as claimed in claims 1-7, disposed on the battery
container (C).
